# EUROPÄISCHE PATENTANMELDUNG

(11) **EP 1 244 233 A2**
(43) Veröffentlichungstag der Anmeldung: **25.09.2002**
(21) Anmeldenummer: 02004796.5
(22) Anmeldetag: 02.03.2002
(51) Int. Cl.: H04H 1/00

(54) **Vorrichtung und Verfahren für den Empfang von Rundfunksignalen unterschiedlicher Übertragungssysteme**

(30) Priorität: 22.03.2001 DE 10114120
(71) Anmelder: GRUNDIG Aktiengesellschaft, 90471 Nürnberg (DE)
(72) Erfinder: Görtler, Michael, 96047 Bamberg (DE)

(57) **Zusammenfassung**

Die vorliegende Erfindung betrifft eine Vorrichtung und ein Verfahren für den Empfang von Rundfunksignalen unterschiedlicher Übertragungssysteme, insbesondere für den mobilen Empfang von Rundfunksignalen unterschiedlicher Übertragungssysteme.

Für den Empfang von Rundfunksignalen unterschiedlicher Übertragungssysteme, insbesondere für den mobilen Empfang von Rundfunksignalen unterschiedlicher Übertragungssysteme, wobei die unterschiedlichen Rundfunksignale empfangen und verarbeitet werden, werden Nutzsignale der empfangenen unterschiedlichen Rundfunksignale decodiert. Für die Decodierung der unterschiedlichen Rundfunksignale sind dabei unterschiedliche Decoder in Form von Software vorgesehen.

## Beschreibung

Die vorliegende Erfindung betrifft eine Vorrichtung und ein Verfahren für den Empfang von Rundfunksignalen unterschiedlicher Übertragungssysteme, insbesondere für den mobilen Empfang von Rundfunksignalen unterschiedlicher Übertragungssysteme.

Es sind Vorrichtungen und Verfahren für den Empfang von Rundfunksignalen für den mobilen Empfang bekannt. Diese Verfahren und Vorrichtungen werden beispielsweise in Fahrzeugen eingesetzt, um Rundfunksignale zu empfangen. Die bekanntesten Vorrichtungen, die üblicherweise als Autoradios bezeichnet werden, sind dabei für den Empfang von analogen, amplituden- oder frequenzmodulierten Rundfunksignalen geeignet. Die Autoradios können üblicherweise UKW- (Ultrakurzwelle), KW- (Kurzwelle), MW- (Mittelwelle) und teilweise LW-Rundfunksignale (Langwelle) empfangen und wiedergeben.

Gegenwärtig werden weitere Übertragungssysteme für Audio- und Zusatzsignale konzipiert und in Betrieb genommen. Die neuen Übertragungssysteme basieren auf digitaler Übertragungstechnik, so daß die bekannten Autoradios für den Empfang und die Wiedergabe der Rundfunksignale dieser Übertragungssysteme nicht mehr geeignet sind. Um auch die Rundfunksignale der neuen Übertragungssysteme empfangen zu können, ist es gegenwärtig üblich, zusätzlich Vorrichtungen für den Empfang der neuartigen Rundfunksignale an die bekannten Autoradios anzuschließen. Die Vorrichtungen für den Empfang der neuartigen Rundfunksignale empfangen dann die digitalen Rundfunksignale, bereiten diese auf und geben die so erzeugten Audiosignale an das Autoradiogerät für die Wiedergabe mittels der Verstärker des Autoradiogeräts und der daran angeschlossenen Lautsprecher weiter.

Die bekannten Vorrichtungen und Verfahren zum Empfang von Rundfunksignalen weisen jedoch zum einen den Nachteil auf, daß für den Empfang der digitalen Rundfunksignale der neuartigen Übertragungssysteme eine zusätzliche Vorrichtung benötigt wird, und daß zum anderen die Vorrichtungen nur jeweils für den Empfang der Rundfunksignale eines neuartigen Übertragungssystems geeignet sind. Letzteres verursacht zum einen erhöhten Aufwand beim Einbau von Autoradios in Fahrzeuge, da, abhängig vom jeweiligen Gebiet in dem das Fahrzeug später eingesetzt werden soll, die entsprechende zusätzliche Vorrichtung eingebaut werden muß, welche die in diesem Gebiet gesendeten Rundfunksignale des dort eingesetzten Übertragungssystems empfangen kann. Zum anderen ist die bekannte Lösung unbefriedigend, da nur jeweils die Rundfunksignale eines neuartigen Übertragungssystems empfangen werden können. Dies führt dazu, daß in Gebieten, in denen mehrere neuartige Übertragungssysteme zur Verfügung stehen, nur die Rundfunksignale eines neuartigen Übertragungssystems empfangen und wiedergegeben werden können, und daß für den Fall, daß das Fahrzeug aus einem Gebiet in ein anderes bewegt wird, in dem ein anderes neuartiges Übertragungssystem verwendet wird, die zusätzliche Vorrichtung nicht mehr verwendet werden kann.

Es ist daher Aufgabe der vorliegenden Erfindung, eine Vorrichtung und ein Verfahren für den Empfang von Rundfunksignalen unterschiedlicher Übertragungssysteme, insbesondere für den mobilen Empfang von Rundfunksignalen unterschiedlicher Übertragungssysteme, anzugeben, die den Empfang einer Vielzahl von Rundfunksignalen unterschiedlicher Übertragungssysteme ermöglichen, ohne daß zusätzliche Vorrichtungen für die Rundfunksignale der unterschiedlichen Übertragungssysteme vorgesehen werden müssen.

Bei der vorliegenden Erfindung wird diese Aufgabe durch die Merkmale der nebengeordneten Ansprüche gelöst.

Bei dem Empfang von Rundfunksignalen unterschiedlicher Übertragungssysteme, insbesondere für den mobilen Empfang von Rundfunksignalen unterschiedlicher Übertragungssysteme, wobei die unterschiedlichen Rundfunksignale empfangen und verarbeitet werden, wird dabei von der Überlegung ausgegangen daß Nutzsignale der empfangenen unterschiedlichen Rundfunksignale decodiert werden, wobei für die Decodierung der unterschiedlichen Rundfunksignale unterschiedliche Decoder in Form von Software vorgesehen sind.

Der Vorteil der Erfindung ist darin zu sehen, daß eine Vielzahl von Rundfunksignalen unterschiedlicher Übertragungssysteme empfangen werden kann, ohne daß zusätzliche Vorrichtungen für die Rundfunksignale der unterschiedlichen Übertragungssysteme vorgesehen werden müssen, wodurch sich eine besonders kostengünstige Realisierung ergibt, die zudem wegen der in Form von Software gespeicherten Decoder eine besonders hohe Flexibilität aufweist.

Bei einer vorteilhaften Weiterbildung ist es vorgesehen, die unterschiedlichen Decoder durch systematisches Ausprobieren daraufhin zu überprüfen, ob sie für die Decodierung des Nutzsignals des jeweils empfangenen Rundfunksignals geeignet sind.

Der Vorteil der Weiterbildung ist darin zu sehen, daß eine besonders einfache Realisierung ermöglicht wird, da nur geringer schaltungstechnischer Aufwand erforderlich ist.

Bei einer anderen vorteilhaften Weiterbildung ist es vorgesehen, den geeigneten Decoder dadurch zu ermitteln, daß das empfangene Rundfunksignals analysiert wird, um die Art des Übertragungssystems zu ermitteln.

Der Vorteil dieser Weiterbildung ist darin zu sehen, daß für das jeweils empfangene Rundfunksignal besonders schnell bestimmt werden kann, welcher Decoder für die Decodierung der Nutzsignale benötigt wird.

Bei einer weiteren Weiterbildung ist es vorgesehen, eine Tabelle zu speichern, welche eine Zuordnung von Decodern zu Empfangsfrequenzen enthält, wobei der Decoder für die jeweilige Empfangsfrequenz anhand der in der Tabelle gespeicherten Zuordnung auswählt wird.

Der Vorteil dieser Weiterbildung ist darin zu sehen, daß für den Fall, daß empfangbaren Frequenzen entsprechende Decoder zugeordnet sind, diese unmittelbar für die Decodierung verwendet werden können, wenn die entsprechende Empfangsfrequenz eingestellt wird. Das Ermitteln eines geeigneten Decoders durch Ausprobieren oder Analysieren kann somit unterbleiben.

Bei noch einer weiteren Weiterbildung ist es vorgesehen, eine Vorauswahl von bestimmten Decodern für bestimmte Gebiete vorzunehmen und innerhalb eines jeden der bestimmten Gebiete nur die vorausgewählten Decoder zu verwenden.

Der Vorteil dieser Weiterbildung ist darin zu sehen, daß die Bestimmung der für die Decodierung geeigneten Decoder innerhalb der jeweiligen Gebiete schneller erfolgen kann, da nur die in die Vorauswahl aufgenommenen Decoder berücksichtigt werden.

Weitere Vorteile der vorliegenden Erfindung ergeben sich aus den abhängigen Ansprüchen sowie der nachfolgenden Beschreibung einer Ausführungsform einer erfindungsgemäßen Vorrichtung anhand einer Figur.

Die einzige Figur zeigt ein Prinzipschaltbild einer Ausführungsform einer Vorrichtung für den Empfang von Rundfunksignalen.

Zur Erleichterung des Verständnisses der vorliegenden Erfindung sind in der Figur nur die Bestandteile der Ausführungsform dargestellt, die im Zusammenhang mit der Erfindung von Bedeutung sind.

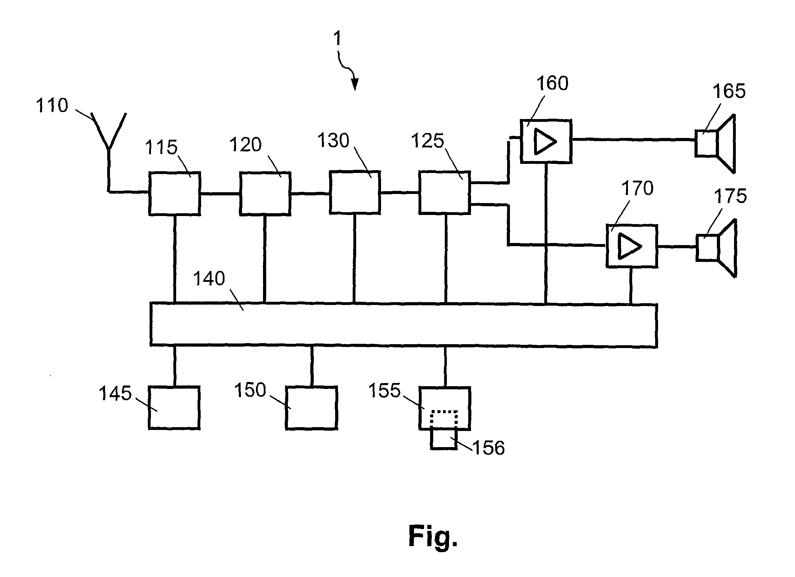

Figur 1 zeigt ein Prinzipschaltbild einer Ausführungsform einer Vorrichtung 1 für den Empfang von Rundfunksignalen unterschiedlicher Übertragungssysteme, insbesondere für den mobilen Empfang von Rundfunksignalen unterschiedlicher Übertragungssysteme. Die Vorrichtung 1 weist eine Antenne 110 und ein Empfangsteil 115 für den Empfang von Rundfunksignalen auf. Das Empfangsteil 115 umfaßt beispielsweise Hochfrequenz- und Zwischenfrequenzschaltungen, welche es erlauben, einen für den Empfang der Rundfunksignale vorgesehenen Frequenzbereich mittels eines Suchlaufs auf Frequenzen mit empfangbaren Rundfunksignalen zu untersuchen. Am Ausgang des Empfangsteils 115 steht beispielsweise ein analoges Basisbandsignal zur Verfügung, welches einer Signalverarbeitungseinrichtung 120 bis 150 zugeführt wird. Die Signalverarbeitungseinrichtung 120 bis 150 weist einen Analog/Dlgltal-Wandler 120 auf, der das Basisbandsingal digitalisiert. Das digitalisierte Bassibandsignal wird einer Einrichtung für die Verarbeitung digitaler Signale 130 zugeführt, beispielsweise einem digitalen Signalprozessor. Der digitale Signalprozessor 130 verarbeitet das digitalisierte Basisbandsignal, d. h. er decodiert ein darin enthaltenes Nutzsignal. Ein im Nutzsignal enthaltenes Audiosignal, z. B. ein Stereosignal, wird an einen Digital/Analog-Wandler 125 übergeben, der das digitale Stereosignal in analoge Audiosignale wandelt. Die Audiosignale werden Verstärkern 160 und 170 zugeführt, welche die Audiosignale für die Wiedergabe mittels Lautsprechern bzw. Gruppen von Lautsprechern 165 und 175 verstärken.

Die Vorrichtung 1 wird von einer Steuereinrichtung 140, die z. B. von einem Mikroprozessor gebildet werden kann, gesteuert. Der Steuereinrichtung 140 weist außerdem einen Speicher 150, mit flüchtigen und nichtflüchtigen Bereichen, sowie eine Bedieneinrichtung 145 auf. Die Bedieneinrichtung 145 wird üblicherweise von Schaltern, Tasten und Reglern gebildet und kann auch eine Fernbedienung umfassen. Mittels der Bedieneinrichtung 145 kann ein Benutzer die Vorrichtung 1 bedienen und beispielsweise das Empfangsteil 115 über die Steuereinrichtung 140 zu dem oben beschriebenen Frequenzsuchlauf nach empfangbaren Sendern bzw. Rundfunksignalen starten. Ebenso werden Parameter wie die Lautstärke, Klangfarbe, Balance usw. der wiederzugebenden Audiosignale über die Bedieneinrichtung 145 eingestellt und von der Steuereinrichtung 140 am Signalprozessor bzw. den Verstärkern 160 und 170 eingestellt.

Wird beim oben beschriebenen Frequenzsuchlauf eine Frequenz gefunden, die einen Signalanteil enthält, d. h. ein empfangbares Rundfunksignal, wird von der Steuereinrichtung 140 ein Decoder in Form von Software aus dem nichtflüchtigen Teil des Speichers 150 in den Signalprozessor 130 geladen. Mit dem so zur Verfügung gestellten Decoder wird eine Decodierung des digitalisierten Basisbandsignals vorgenommen.

Der digitale Signalprozessor 130 oder die Steuereinrichtung 140 überprüft das durch die Decodierung gewonnene Signal anschließend, ob nunmehr ein korrekt decodiertes Audiosignal vorliegt. Ist dies der Fall, wird das auf der eingestellten Frequenz empfangbare Rundfunksignal mit dem entsprechenden Decoder decodiert und wiedergegeben. Gleichzeitig wird im nichtflüchtigen Teil des Speichers 150 eine Tabelle angelegt, in der für die am Empfangsteil 115 eingestellte Frequenz gespeichert wird, welcher Decoder bzw. welche Software für die Decodierung des auf dieser Frequenz empfangenen Signals geeignet ist.

Wird bei der Überprüfung des decodierten Signals allerdings festgestellt, daß kein korrekt decodiertes Audiosignal vorliegt, wird die Software eines anderen Decoders - wie oben beschrieben - in den digitalen Signalprozessor 130 geladen. Eine erneute Überprüfung erfolgt.

Dieses Verfahren wird solange fortgesetzt, bis die Software eines Decoders gefunden ist, welche für die Decodierung geeignet ist. Sollte eine Decodierung mit den im nichtflüchtigen Teil des Speichers 150 enthaltenen Decodern nicht möglich sein, wird der Frequenzsuchlauf von der Steuereinrichtung 140 fortgesetzt. Gleichzeitig kann es vorgesehen sein, daß in der oben beschriebenen Tabelle ein Eintrag für diese Frequenz gemacht wird, aus dem hervorgeht, daß kein geeigneter Decoder für das auf dieser Frequenz empfangbare Rundfunksignal vorhanden ist. Bei einem späteren Frequenzsuchlauf kann diese Frequenz dann übersprungen werden.

Im nichtflüchtigen Teil des Speichers 150 kann eine Anzahl von Decodern bzw. eine entsprechende Anzahl von Software gespeichert sein. Die Decoder können beispielsweise für die Decodierung von analogen Rundfunksignalen, die amplituden- und/oder frequenzmoduliert sein können, geeignet sein. Weitere Decoder können für die Decodierung von digitalen Rundfunksignalen geeignet sein. Dabei kann es sich beispielsweise um digitale Rundfunksignale nach IBOC (In Band On Channel), Sattelite Radio, Eureka DAB (Digital Audio Broadcast, nach Eureka-147), DRM (Digital Radio Mondial), DVB-T (Digital Video Broadcast Terrestric, nach den Verfahren 2-k oder 8-k) usw. handeln.

Um weitere Decoder und/oder Tabellen verfügbar zu machen, kann es vorgesehen sein, z. B. ein Lesegerät 155 für Flash-Cards 156 vorzusehen. Die Flash-Card 156 enthält dann einen oder mehrere weitere Decoder in Form von Software, die direkt aus der Flash-Card 156 in den digitalen Signalprozessor 130 geladen werden. Ebenso kann die Software der Flash-Card 156 in den nichtflüchtigen Teil des Speichers 150 überführt werden.

Neben der Verwendung von Flash-Cards 156 mit zugehörigem Lesegerät 155 ist auch die Verwendung anderer Speichermedien mit zugehörigen Lesegeräten möglich, z. B. die Verwendung von CDs mit zugehörigem Lesegerät. Dies ist dann besonders vorteilhaft, wenn ein ohnehin an der Vorrichtung 1 angeschlossenes CD-Lesegerät vorhanden ist, z. B. für die Wiedergabe von Audio-CDs oder als Datenquelle für ein Navigationssystem.

Es kann auch vorgesehen sein, daß eine bestimmte Anzahl von in Form von Software im Speicher 150 gespeicherten Decodern ausgewählt wird, z. B. weil das Fahrzeug in dem die Vorrichtung 1 eingebaut ist, vornehmlich in einem bestimmten Gebiet bewegt wird, für das bekannt ist, welche Übertragungssysteme dort eingesetzt werden, woraus klar erkenntlich ist, wie die empfangbaren Rundfunksignale codiert sind. Neben der Auswahl bestimmter Decoder kann es auch vorgesehen sein, die entsprechenden Decoder für bestimmte Gebiete zusammenzustellen, so daß allein durch die Auswahl des jeweiligen Gebiets die entsprechenden Decoder ausgewählt sind und zur Verfügung stehen.

Die Auswahl kann durch einen Benutzer erfolgen. Es ist aber auch möglich, ein z. B. ohnehin vorhandenes Navigationssystem zu verwenden um die Auswahl des entsprechenden Gebiets bzw. der entsprechenden Decoder vorzunehmen.

Neben der alleinigen Auswahl bestimmter Decoder für bestimmte Gebiete, ist es auch möglich eine Tabelle der oben beschriebenen Art anzulegen. In diesem Fall werden für die bestimmten Gebiete Tabellen angelegt, in denen der jeweiligen Empfangsfrequenz der Decoder zugeordnet wird, der für das Übertragungssystem geeignet ist, welches die Rundfunksignale auf dieser Empfangsfrequenz sendet.

Neben dem oben beschriebenen Auswählen bzw. Vorauswählen von Decodern bzw. der zugehörigen Software ist es auch möglich, daß der digitale Signalprozessor 130 das digitalisierte Basisbandsignal analysiert, um festzustellen, von welchem Übertragungssystem das empfangene Rundfunksignal stammt, wodurch die Software des entsprechenden Decoders ausgewählt werden kann.

Besonders geeignet ist diese Vorgehensweise für die Erkennung von Rundfunksignalen, welche nach DAB (Digital Audio Broadcast, nach dem Standard Eureka-147), DVB-T (Digital Video Broadcast Terrestric), nach dem 2-k oder 8-k Verfahren und/oder DRM (Digital Radio Mondial) codiert sind. Ebenso gut zur Erkennung geeignet sind analoge AM- und/oder FM-Rundfunksignale (analog- und/oder frequenzmodulierte Rundfunksignale), deren Basisbandsignale mit geeigneter Decoder-Software ebenfalls von dem digitalen Signalprozessor 130 bearbeitet werden können.

Neben dem oben beschriebenen Aufbau der Vorrichtung 1 sind vielfältige Variationen oder Kombinationen der beschriebenen Ausführungsbeispiele möglich. Insbesondere kann statt eines digitalen Signalprozessors 130 und einer Steuereinrichtung 140 nur ein Signalprozessor 130 vorhanden sein, der auch die Steuerung der Vorrichtung 1 übernimmt oder sämtliche Aufgaben werden von der Steuereinrichtung 140 übernommen.

Außerdem können im Nutzsignal der empfangenen Rundfunksignale Zusatzsignale enthalten sein, welche verschiedenste Informationen enthalten können. Beispielsweise können in diesen Zusatzsignalen Informationen über das Verkehrsaufkommen im jeweiligen Gebiet enthalten sein. Diese Zusatzinformationen eignen sich in der oben beschriebenen Weise, eine Auswahl oder Vorauswahl eines oder mehrerer Decoder zu treffen, die für das aus den Zusatzsignalen ermittelte Gebiet relevant sind. Die Zusatzsignale können mittels des digitalen Signalporzessors 130 oder der Steuereinrichtung 140 zusammen mit den Audiosignalen decodiert werden.

## Patentansprüche

1. Vorrichtung für den Empfang von Rundfunksignalen unterschiedlicher Übertragungssysteme, insbesondere für den mobilen Empfang von Rundfunksignalen unterschiedlicher Übertragungssysteme, mit einem Empfangsteil (115) für den Empfang der Rundfunksignale, und einer Signalverarbeitungseinrichtung (120 bis 150) für die Verarbeitung der empfangenen Rundfunksignale,
**dadurch gekennzeichnet,daß**
die Signalverarbeitungseinrichtung (120 bis 150) Nutzsignale der vom Empfangsteil (115) empfangenen unterschiedlichen Rundfunksignale mittels einer Einrichtung für die Verarbeitung digitaler Signale (130) decodiert, wobei für die Decodierung der unterschiedlichen Rundfunksignale unterschiedliche Decoder in Form von Software in einem Speicher (150) gespeichert sind.

2. Vorrichtung nach Anspruch 1,
**dadurch gekennzeichnet, daß**
die Signalverarbeitungseinrichtung (120 bis 150) den für die Decodierung eines empfangenen Rundfunksignals geeigneten Decoder auswählt und für die Decodierung des empfangenen Rundfunksignals verwendet.

3. Vorrichtung nach Anspruch 2,
**dadurch gekennzeichnet, daß**
die Signalverarbeitungseinrichtung (120 bis 150) den geeigneten Decoder dadurch auswählt, daß sie nacheinander die im Speicher (150) gespeicherten unterschiedlichen Decoder auswählt und für die Decodierung des empfangenen Rundfunksignals verwendet.

4. Vorrichtung nach Anspruch 2,
**dadurch gekennzeichnet, daß**
die Signalverarbeitungseinrichtung (120 bis 150) den geeigneten Decoder dadurch ermittelt, daß sie das empfangene Rundfunksignals analysiert, um die Art des Übertragungssystems zu ermitteln.

5. Vorrichtung nach einem der Ansprüche 2 bis 4,
**dadurch gekennzeichnet, daß**
im Speicher (150) eine Tabelle gespeichert ist und/oder wird, welche eine Zuordnung von Decodern zu Empfangsfrequenzen enthält, und daß die Signalverarbeitungseinrichtung (120 bis 150) den Decoder für die jeweilige Empfangsfrequenz anhand der Tabelle auswählt.

6. Vorrichtung nach einem der Ansprüche 2 bis 5,
**dadurch gekennzeichnet, daß**
im Speicher (150) eine Vorauswahl von bestimmten Decodern für bestimmte Gebiete gespeichert ist, und daß die Signalverarbeitungseinrichtung (120 bis 150) den Decoder innerhalb eines bestimmten Gebiets nur aus der Vorauswahl auswählt.

7. Vorrichtung nach Anspruch 6,
**dadurch gekennzeichnet, daß**
ein Navigationssystem an die Vorrichtung (1) angeschlossen ist, welche das Gebiet ermittelt, in dem die Vorrichtung (1) sich befindet, um die im Speicher (150) für das ermittelte Gebiet gespeicherte Vorauswahl von bestimmten Decodern zu bestimmen.

8. Vorrichtung nach einem der Ansprüche 1 bis 7,
**dadurch gekennzeichnet, daß**
die Einrichtung für die Verarbeitung digitaler Signale (130) von einem digitalen Signalprozessor gebildet wird.

9. Vorrichtung nach einem der Ansprüche 1 bis 8,
**dadurch gekennzeichnet, daß**
ein Lesegerät (155) an die Vorrichtung (1) angeschlossen ist, um der Vorrichtung (1) mittels Datenträger (156) weitere Decoder und/oder Tabellen zur Verfügung zu stellen.

10. Verfahren für den Empfang von Rundfunksignalen unterschiedlicher Übertragungssysteme, insbesondere für den mobilen Empfang von Rundfunksignalen unterschiedlicher Übertragungssysteme, wobei die unterschiedlichen Rundfunksignale empfangen und verarbeitet werden,
**dadurch gekennzeichnet, daß**
Nutzsignale der empfangenen unterschiedlichen Rundfunksignale decodiert werden, wobei für die Decodierung der unterschiedlichen Rundfunksignale unterschiedliche Decoder in Form von Software vorgesehen sind.

11. Verfahren nach Anspruch 10,
**dadurch gekennzeichnet, daß**
die für die Decodierung eines empfangenen Rundfunksignals geeigneten Decoder auswählt und für die Decodierung des empfangenen Rundfunksignals verwendet werden.

12. Verfahren nach Anspruch 11,
**dadurch gekennzeichnet, daß**
der geeignete Decoder dadurch ermittelt wird, daß die vorgesehenen, unterschiedlichen Decoder nacheinander auswählt und für die Decodierung des empfangenen Rundfunksignals verwendet werden.

13. Verfahren Anspruch 11,
**dadurch gekennzeichnet, daß**
der geeignete Decoder dadurch ermittelt wird, daß das empfangene Rundfunksignal analysiert wird, um die Art des Übertragungssystems zu ermitteln.

14. Verfahren nach einem der Ansprüche 11 bis 13,
**dadurch gekennzeichnet, daß**
eine Tabelle gespeichert ist und/oder wird, welche eine Zuordnung von Decodern zu Empfangsfrequenzen enthält, und daß der Decoder für die jeweilige Empfangsfrequenz anhand der Tabelle auswählt wird.

15. Verfahren nach einem der Ansprüche 11 bis 14,
**dadurch gekennzeichnet, daß**
eine Vorauswahl von bestimmten Decodern für bestimmte Gebiete gespeichert ist, und daß der Decoder innerhalb eines bestimmten Gebiets nur aus der gespeicherten Vorauswahl auswählt wird.
